(19) Europäisches Patentamt
European Patent Office
Office européen des brevets

(11) **EP 2 190 704 B1**

(12) **EUROPÄISCHE PATENTSCHRIFT**

(45) Veröffentlichungstag und Bekanntmachung des Hinweises auf die Patenterteilung:
**18.11.2015 Patentblatt 2015/47**

(21) Anmeldenummer: **08803820.3**

(22) Anmeldetag: **08.09.2008**

(51) Int Cl.:
**B60T 8/1755** (2006.01)

(86) Internationale Anmeldenummer:
**PCT/EP2008/061851**

(87) Internationale Veröffentlichungsnummer:
**WO 2009/037139 (26.03.2009 Gazette 2009/13)**

(54) **VERFAHREN ZUR WARNUNG DES FAHRERS EINES KRAFTFAHRZEUGS BEI ERHÖHTER UNFALLGEFAHR**

METHOD FOR WARNING THE DRIVER OF A MOTOR VEHICLE IN CASE OF INCREASED RISK OF AN ACCIDENT

PROCÉDÉ POUR AVERTIR UN CONDUCTEUR DE VÉHICULE AUTOMOBILE EN CAS DE RISQUE ACCRU D'ACCIDENT

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **13.09.2007 DE 102007043604**

(43) Veröffentlichungstag der Anmeldung:
**02.06.2010 Patentblatt 2010/22**

(73) Patentinhaber: **Robert Bosch GmbH
70442 Stuttgart (DE)**

(72) Erfinder:
• **ROELKE, Volker
70197 Stuttgart (DE)**
• **FREESS, Jascha
74182 Obersulm (DE)**
• **KNOOP, Michael
71638 Ludwigsburg (DE)**
• **RENTSCHLER, Tobias
75180 Pforzheim (DE)**

(56) Entgegenhaltungen:
**EP-B- 0 943 515          DE-A1- 10 029 874
US-A1- 2004 252 020**

**Beschreibung**

Die Erfindung bezieht sich auf ein Verfahren zur Warnung des Fahrers eines Kraftfahrzeugs bei erhöhter Unfallgefahr nach dem Oberbegriff des Anspruches 1.

Stand der Technik

DE 100 29 874 A1 offenbart eine Fahrzeugfahrsicherheitseinrichtung, um unter Verwendung eines Objekterfassungsmittels wie z.B. einer Radareinrichtung zu verhindern, dass ein Fahrzeug mit einem entgegenkommenden Fahrzeug kollidiert.

Aus der DE 10 2004 030 756 A1 ist ein Verfahren zur kinästhetischen Warnung des Fahrers eines Kraftfahrzeugs in Situationen mit erhöhtem Kollisionsrisiko bekannt. Das Kraftfahrzeug ist mit einem Objektdetektionssensor ausgestattet, der beispielhaft als Radarsensor, Ultraschallsensor oder Videosensor ausgeführt ist, und über den der Abstand und die Relativgeschwindigkeit eines Objektes in Bezug auf das eigene Kraftfahrzeug ermittelt werden können. In Verbindung mit weiteren Eingangsdaten wie zum Beispiel der eigenen Fahrzeuggeschwindigkeit kann daraus ein Gefahrenwert für eine Kollision mit dem entsprechenden Objekt ermittelt werden. Bei erhöhter Kollisionsgefahr wird zur Warnung des Fahrers die Bremseinrichtung im Fahrzeug selbsttätig angesteuert und ein Bremsruck erzeugt, der vom Fahrer wahrgenommen wird. Die Aufmerksamkeit des Fahrers wird dadurch effektiv angesprochen.

Offenbarung der Erfindung

Der Erfindung liegt die Aufgabe zugrunde, den Fahrer eines Kraftfahrzeugs bei erhöhter Unfallgefahr zu Unfall verhindernden bzw. die Schwere des Unfalls reduzierenden Maßnahmen zu veranlassen.

Diese Aufgabe wird erfindungsgemäß mit den Merkmalen des Anspruches 1 gelöst. Die Unteransprüche geben zweckmäßige Weiterbildungen an.

Bei dem erfindungsgemäßen Verfahren wird der Fahrer auf kinästhetische Weise vor einem drohenden Unfall gewarnt, dessen Herannahen mithilfe einer Unfalldetektionseinrichtung im Kraftfahrzeug ermittelt wird. Die Warnung des Fahrers erfolgt dadurch, dass im Kraftfahrzeug eine Fahrzustandsgröße verändert wird, insbesondere ruck- bzw. impulsartig, um den Fahrer zu einer entsprechenden Reaktion zu veranlassen. Erfindungsgemäß ist vorgesehen, dass als Fahrzustandsgröße die Gierrate bzw. eine damit korrelierende Zustandsgröße verändert wird. Um jedoch den Einfluss der selbsttätig geänderten Gierrate auf die Fahrdynamik möglichst gering zu halten, liegt die Änderung der Gierrate unterhalb eines vorgegebenen bzw. berechneten, oberen Grenzwerts. Dadurch ist sichergestellt, dass einerseits der Fahrer gewarnt wird und andererseits die Warnung an sich keinen oder zumindest keinen wesentlichen Einfluss auf die Querdynamik des Fahrzeugs hat; der Einfluss auf die Querdynamik bleibt der Reaktion des Fahrers vorbehalten. Andererseits liegt die Änderung der Gierrate vorzugsweise oberhalb eines vorgegebenen bzw. berechneten, unteren Grenzwertes, um sicherzustellen, dass die Gierratenänderung vom Fahrer bemerkt und als Warnsignal verstanden wird.

Grundsätzlich liegt dieser Vorgehensweise der Gedanke zugrunde, den Fahrer auf intuitive Weise auf eine außergewöhnliche Situation, nämlich den herannahenden Unfall aufmerksam zu machen. Der Fahrer spürt den Eingriff in die Gierrate und nimmt diesen Eingriff als Warnung wahr, und zwar mit einer geringstmöglichen Reaktionszeit. Aufgrund des direkten Zusammenhangs zwischen der Ausprägung der Warnung und der erforderlichen Handlung wird der Fahrer intuitiv diejenige Maßnahme ergreifen, die zur Unfallverhinderung bzw. zur Reduzierung der Schwere des Unfalls geeinget ist. Da die Warnung als Änderung der Gierrate erfolgt, wird der Fahrer einen Lenkeinschlag durchführen, so dass die über die Änderung der Gierrate erzeugte Warnung vom Fahrer durch einen entsprechenden Lenkwinkeleinschlag verstärkt wird. Damit obliegt letztendlich dem Fahrer die Verantwortung für den Eingriff in die Querdynamik des Fahrzeugs.

Der Zeitverlauf des Warnsignals kann auf unterschiedliche Arten realisiert werden. Beispielsweise kann die Änderung der Gierrate mit der zu erwartenden Unfallschwere korrelieren, so dass das Warnsignal um so stärker ausfällt, je größer der zu erwartende Schaden ist. Kumulativ oder alternativ kann das Warnsignal auch mit der Unfallwahrscheinlichkeit verknüpft werden, derart, dass mit zunehmender Unfallwahrscheinlichkeit auch die Stärke des Warnsignals zunimmt. In jedem Fall ist es aber zweckmäßig, dass das Warnsignal, also die Änderung der Gierrate, unterhalb des vorgegebenen oder berechneten oberen Grenzwertes liegt.

Gemäß einer weiteren vorteilhaften Ausführung wird die Gierrate nur für den Fall geändert, dass die Wahrscheinlichkeit des prognostizierten Unfalls einen Schwellenwert überschreitet. Mit dieser Bedingung ist sichergestellt, dass nur bei einem ernsthaft zu erwartenden Unfall ein Warnsignal erzeugt wird, wohingegen bei einer sehr geringen Unfallwahrscheinlichkeit auch kein derartiges Warnsignal generiert wird, um den Fahrer nicht unnötigerweise zu irritieren.

Die Änderung der Gierrate kann weiteren Bedingungen unterworfen sein. So kann es zweckmäßig sein, dass der Aufbaugradient, mit dem die Gierrate erhöht wird, maximiert wird, so dass über der Zeit gesehen eine praktisch impulsartige Gierratenänderung durchgeführt wird. Ebenso kann es zweckmäßig sein, auch den zeitabhängigen Rückführgradient, mit dem die Gierrate wieder abgesenkt wird, zu maximieren. Insgesamt führt dies zu einem Gierratenimpuls mit schlagartigem Auf- und Abbau der Gierratenänderung.

Aus Sicherheitsgründen wird die Gierrate nur in stabilen Fahrzuständen geändert, um zu verhindern, dass in einem instabilen Fahrzeugzustand eine weitere Destabilisierung eintritt. Als Maß für die Stabilität des Fahrzustandes wird beispielhaft der Schwimmwinkel des Kraftfahrzeugs betrachtet, wobei eine Änderung der Gierrate nur für den Fall durchgeführt wird, dass der Schwimmwinkel unterhalb eines zulässigen Grenzwertes liegt.

Vorteilhafterweise wird die Gierrate als Funktion des Trägheitsmomentes des Fahrzeugs um die Hochachse und des Giermoments geändert. Technisch kann die Änderung der Gierrate dadurch realisiert werden, dass beispielsweise mindestens ein Fahrzeugrad gezielt abgebremst wird. Es ist aber auch möglich, Radmomente an den Rädern einer Achse mittels eines so genannten Torque-Vectoring-Stellers zu beeinflussen, bei dem Momente von einem Rad an das andere Rad der gleichen Achse verschoben werden. Bei dem Torque-Vectoring-Steller handelt es sich zum Beispiel um ein Differenzial mit aktiv betätigbarer Kupplung. Des Weiteren können aktive Lenksysteme zur Erzeugung der Gierratenänderung eingesetzt werden, beispielsweise ein AFS (Active Front Steering), mit dem ein Zusatzlenkwinkel an der Vorderachse einstellbar ist, oder ein Hinterachs-Lenksystem, mit ein Zusatzlenkwinkel an den lenkbaren Rädern der Hinterachse einstellbar ist.

Über die Unfalldetektionseinrichtung im Kraftfahrzeug wird vorteilhafterweise auch die Information darüber geliefert, in welche Richtung die querdynamische Bewegung des Fahrzeugs geändert werden muss, um zur Unfallvermeidung oder Unfallfolgenminderung beizutragen. Dementsprechend wird die Gierratenänderung mit zunehmendem oder abnehmendem Gierwinkel durchgeführt.

Sofern im Fahrzeug mehrere aktive Stellsysteme vorhanden sind, über die eine Gierratenänderung erreicht werden kann, kann auch eine Mehrzahl dieser Stellsysteme zeitgleich für die Umsetzung des Gierimpulses eingesetzt werden. Damit kann die Totzeit zwischen dem Zeitpunkt der Unfallerkennung und der Auslösung des Gierimpulses minimiert sowie ein hoher Aufbaugradient des Gierimpulses erreicht werden. Außerdem können Rückwirkungen auf das Lenkrad vermieden werden, die andernfalls den Fahrer irritieren könnten.

Weitere Vorteile und zweckmäßige Ausführungen sind den weiteren Ansprüchen, der Figurenbeschreibung und den Zeichnungen zu entnehmen. Es zeigen:

Fig. 1    ein Blockschaltbild mit den verschiedenen Phasen des erfindungsgemäßen Verfahrens zur Warnung des Fahrers im Falle einer erhöhten Unfallgefahr,

Fig. 2    ein Diagramm mit dem Verlauf des Giermoments als Funktion der Zeit, wobei die Fläche unter dem Giermoment ein Maß für die Änderung der Gierrate darstellt.

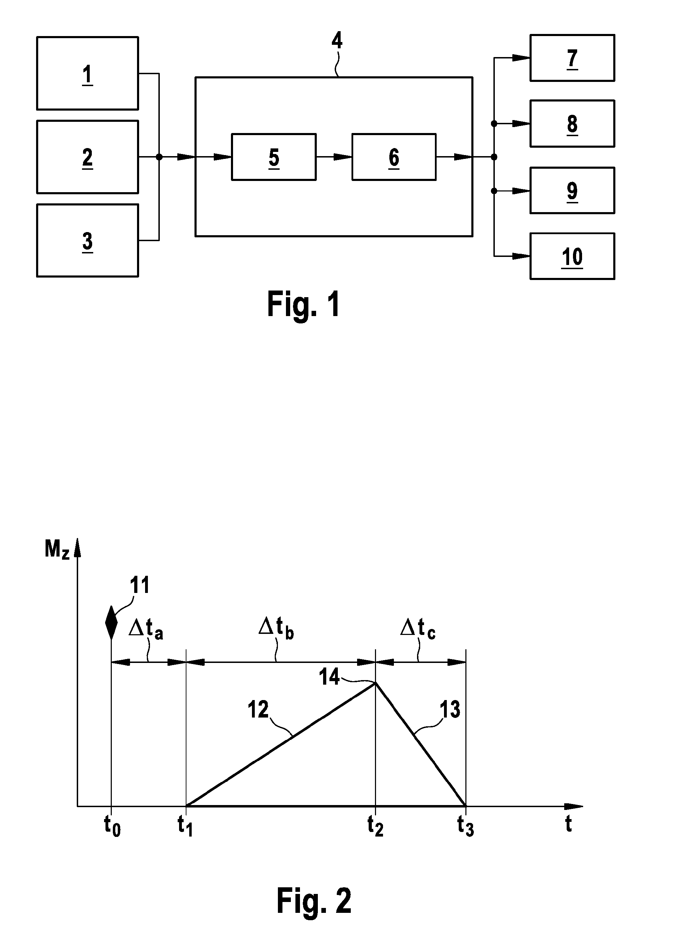

Dem Ablaufschema nach Fig. 1 ist zu entnehmen, dass in einem ersten Verfahrensschritt 1 mithilfe einer bordeigenen Unfalldetektionseinrichtung die Gefahr einer bevorstehenden Kollision bzw. eines sonstigen Unfalles erkannt wird. Hierzu werden Unfalldetektionseinrichtungen wie zum Beispiel Radar-, Ultraschall- oder Infrarotsensoren und videobasierte Systeme eingesetzt. Diese Systeme können auch dazu dienen, gemäß Verfahrensschritt 2 zu erkennen, ob das Fahrzeug die vorgegebene Fahrbahn bzw. Fahrspur verlässt. Zusätzlich oder alternativ zu den vorgenannten berührungslos arbeitenden Detektionseinrichtungen können auch GPS-Systeme (Global Positioning System) zur Positionsbestimmung des Fahrzeuges in Verbindung mit einem elektronisch hinterlegten Straßennetz eingesetzt werden.

In einem weiteren Verfahrensschritt 3 wird der Fahrzustand des Kraftfahrzeugs festgestellt, wofür im Sensor mitgeführte Sensoren eingesetzt werden, beispielsweise Beschleunigungssensoren und Gierratensensoren, wobei gegebenenfalls auch eine rechnerische Ermittlung des Fahrzustandes in Betracht kommt, beispielsweise über so genannte Beobachtermodelle.

Die in den Verfahrensschritten 1 bis 3 gesammelten Daten werden in einem Regel- bzw. Steuergerät 4 verarbeitet, in welchem eine Entscheidung über weitere Maßnahmen getroffen wird. Exemplarisch eingetragen sind Verfahrensschritte 5 und 6, die in dem Regel- bzw. Steuergerät 4 durchgeführt werden, wobei im Verfahrensschritt 5 zunächst die Entscheidung getroffen wird, ob auf der Grundlage der gesammelten und ausgewerteten Daten und Informationen eine Warnung an den Fahrer in Form eines Gierimpulses bzw. einer Änderung $\Delta\omega$ der Gierrate $\psi$ erzeugt wird. Sofern die Entscheidung zugunsten einer Warnung getroffen wurde, wird im nachfolgenden Verfahrensschritt 6 ein aktives Stellglied im Kraftfahrzeug ausgewählt, bei dessen Beaufschlagung die Querdynamik des Fahrzeuges und damit auch die Gierrate beeinflusst werden kann.

Diese Stellglieder sind in den Verfahrensschritten 7 bis 10 repräsentiert. Beispielhaft handelt es sich bei Verfahrensschritt 7 um die Ansteuerung eines aktiven Bremssystemes, welches ein Radbremsmoment $M_B$ an mindestens einem Fahrzeugrad erzeugt. Hierdurch ist es möglich, ein Giermoment $M_Z$ um die Fahrzeughochachse z zu generieren. Die Höhe des Radbremsmomentes $M_B$ kann aus einem gewünschten Giermoment-Verlauf gemäß der Funktion

$$M_B = M_z \frac{2r_R}{b}$$

in Abhängigkeit des Radradius $r_R$ und der Spurweite b ermittelt werden.

Alternativ oder kumulativ können gemäß Verfahrensschritt 8 Radmomente $M_R$ an einer Fahrzeugachse auch mit einem so genannten Torque-Vectoring-Steller beeinflusst werden, mit dessen Hilfe Momente von einem Rad an das andere Rad der gleichen Achse verschoben werden. Das zu verschiebende Radmoment $M_R$ ergibt sich in Abhängigkeit des gewünschten Giermoment-Verlaufs $M_z$ zu

$$M_R = \pm M_z \frac{r_R}{b} \quad ,$$

wobei das Radmoment $M_R$ vom Rad an einer Seite der Achse abzuziehen und am gegenüberliegenden Rad der gleichen Achse hinzu zu addieren ist.

Gemäß noch einer weiteren Alternative, die in Verfahrensschritt 9 repräsentiert ist, wird ein aktives Vorderachs-Lenksystem angesteuert, bei dem als Funktion des gewünschten Giermoment-Verlaufs $M_z$ ein Zusatzlenkwinkel $\Delta\delta$ gemäß der Funktion

$$\Delta\delta = \frac{1}{c_{\alpha V} l_V \cos\delta} M_z$$

in Abhängigkeit der Schräglaufsteifigkeit $c_{\alpha V}$ der Vorderachse, dem Abstand $l_V$ zwischen Vorderachse und Fahrzeugschwerpunkt und dem Lenkwinkel $\delta$ ermittelt wird.

Außerdem ist es auch möglich, für den Fall, dass das Kraftfahrzeug mit einem aktiven Hinterachs-Lenksystem ausgestattet ist, dieses anzusteuern (Verfahrensschritt 10). Zu diesem Zweck wird im Hinterachs-Lenksystem ein Zusatzlenkwinkel $\Delta\delta_R$ gemäß der Funktion

$$\Delta\delta_R = \frac{1}{c_{\alpha R} l_R \cos\delta_R} M_z$$

in Abhängigkeit der Schräglaufsteifigkeit $c_{\alpha R}$ der Hinterachse, dem Abstand $l_R$ zwischen Hinterachse und Fahrzeugschwerpunkt und dem Lenkwinkel $\delta_R$ im Hinterachs-Lenksystem ermittelt wird.

Zur Erzeugung des Gierimpulses bzw. der Änderung $\Delta\omega$ der Gierrate $\dot\psi$ wird, wie in dem Verlauf nach Fig. 2 dargestellt, die Fläche unter dem gewünschten Verlauf des Giermoments $M_z$ gemäß folgender Funktion aufintegriert:

$$\Delta\omega = \frac{1}{J_z} \int_{t_1}^{t_3} M_z \, dt \quad ,$$

wobei mit $J_z$ das Trägheitsmoment des Fahrzeugs um die Hochachse z bezeichnet wird.

Die Integration des Giermoments $M_z$ erfolgt zwischen den zwei Zeitpunkten $t_1$ und $t_3$, zwischen denen im Ausführungsbeispiel nach Fig. 2 ein Giermoment >0 bestehen soll.

Eingetragen ist in Fig. 2 auch in symbolischer Weise ein mit Bezugszeichen 11 gekennzeichnetes Ereignis, welches zum Zeitpunkt $t_0$ stattfindet und das die Unfallerkennung repräsentiert, die in der Unfalldetektionseinrichtung im Kraftfahrzeug durchgeführt wird. Der mit At, gekennzeichnete Zeitraum zwischen dem Erkennen des Unfalls zum Zeitpunkt $t_0$ und dem Aufbau des Gierimpulses zum Zeitpunkt $t_1$ stellt die Totzeit dar, die systembedingt ist und bis zum Erzeugen der Warnung in Form des Gierimpulses verstreicht. Die Totzeit kann durch Zusammenwirken verschiedener Stellsysteme verringert werden.

Im Ausführungsbeispiel nimmt das Giermoment $M_z$ einen dreieckförmigen Verlauf ein, wobei die Katheten 12 und 13 des Giermoment-Dreiecks den Aufbaugradient bzw. den Rückführgradient für den Aufbau bzw. die Reduzierung des Gierimpulses darstellen. Der höchste Punkt 14 entspricht der Impulshöhe. Die Gradienten 12 oder 13 sind zeitabhängig und können nach unterschiedlichen Kriterien erzeugt werden, beispielsweise zeitabhängig maximiert werden, um eine möglichst schlagartige Änderung $\Delta\omega$ der Gierrate $\dot\psi$ in Form eines angenäherten Einzelimpulses zu erreichen.

**Patentansprüche**

1. Verfahren zur Warnung des Fahrers eines Kraftfahrzeugs, das mit einer Unfalldetektionseinrichtung ausgestattet ist, wobei im Falle einer erhöhten Unfallgefahr zur Warnung des Fahrers mindestens eine Fahrzustandsgröße im Kraftfahrzeug verändert wird,
**dadurch gekennzeichnet, dass** die zu ändernde Fahrzustandsgröße die Gierrate ($\dot\psi$) bzw. eine damit korrelierende Zustandsgröße ist, wobei die Warnung derart ausgestattet ist, dass es sich dabei um einen Gierratenimpuls mit einer schlagartigen Änderung der Gierrate handelt, welcher jedoch an sich keinen oder zumindest keinen wesentlichen Einfluss auf die Querdynamik des Kraftfahrzeugs hat.

2. Verfahren nach Anspruch 1,
**dadurch gekennzeichnet, dass** die Änderung ($\Delta\omega$) der Gierrate ($\dot\psi$) unterhalb eines vorgegebenen bzw. berechneten oberen Grenzwerts liegt.

3. Verfahren nach Anspruch 1 oder 2,
**dadurch gekennzeichnet, dass** die Änderung ($\Delta\omega$) der Gierrate ($\dot\psi$) mit der Unfallwahrscheinlichkeit und/oder der zu erwartenden Unfallschwere korreliert.

4. Verfahren nach einem der Ansprüche 1 bis 3,
**dadurch gekennzeichnet, dass** die Gierrate ($\dot\psi$) nur für den Fall geändert wird, dass die Wahrscheinlichkeit des prognostizierten Unfalls einen Schwellenwert überschreitet.

5. Verfahren nach einem der Ansprüche 1 bis 4,

**dadurch gekennzeichnet, dass** die Änderung ($\Delta\omega$) der Gierrate ($\dot\psi$) oberhalb eines vorgegebenen bzw. berechneten unteren Grenzwerts liegt.

6. Verfahren nach einem der Ansprüche 1 bis 5, **dadurch gekennzeichnet, dass** der zeitabhängige Aufbaugradient, mit dem die Gierrate ($\dot\psi$) erhöht wird, maximiert wird.

7. Verfahren nach einem der Ansprüche 1 bis 6, **dadurch gekennzeichnet, dass** der zeitabhängige Rückführgradient, mit dem die Gierrate ($\dot\psi$) wieder abgesenkt wird, maximiert wird.

8. Verfahren nach einem der Ansprüche 1 bis 7, **dadurch gekennzeichnet, dass** die Gierrate ($\dot\psi$) zur Warnung des Fahrers nur in stabilen Fahrzuständen geändert wird.

9. Verfahren nach Anspruch 8, **dadurch gekennzeichnet, dass** die Gierrate ($\dot\psi$) nur geändert wird, wenn der Schwimmwinkel des Kraftfahrzeugs unterhalb eines zulässigen Grenzwerts liegt.

10. Verfahren nach einem der Ansprüche 1 bis 9, **dadurch gekennzeichnet, dass** die Gierrate ($\dot\psi$) als Funktion des Trägheitsmoments ($J_2$) des Fahrzeugs um die Hochachse geändert wird.

11. Verfahren nach einem der Ansprüche 1 bis 10, **dadurch gekennzeichnet, dass** die Gierrate ($\dot\psi$) als Funktion des Giermoments ($M_z$) um die Hochachse geändert wird.

12. Verfahren nach Anspruch 10 und 11, **dadurch gekennzeichnet, dass** die Änderung ($\Delta\omega$) der Gierrate ($\dot\psi$) gemäß folgender Funktion durchgeführt wird:

$$\Delta\omega = \frac{1}{J_z} \int M_z dt \ .$$

13. Verfahren nach einem der Ansprüche 1 bis 12, **dadurch gekennzeichnet, dass** mindestens ein Fahrzeugrad zur Änderung ($\Delta\omega$) der Gierrate ($\dot\psi$) abgebremst wird.

14. Verfahren nach einem der Ansprüche 1 bis 13, **dadurch gekennzeichnet, dass** Antriebsmomente durch Beaufschlagung aktiver Stellglieder zwischen verschiedenen Fahrzeugrädern zur Änderung der Gierrate ($\dot\psi$) verteilt werden.

15. Verfahren nach einem der Ansprüche 1 bis 14,

**dadurch gekennzeichnet, dass** die Gierrate ($\dot\psi$) durch Erzeugung eines Zusatzlenkwinkels in einem aktiven Lenksystem geändert wird.

16. Verfahren nach Anspruch 15, **dadurch gekennzeichnet, dass** der Zusatzlenkwinkel in einem aktiven Vorderachs-Lenksystem eingestellt wird.

17. Verfahren nach Anspruch 15 oder 16, **dadurch gekennzeichnet, dass** der Zusatzlenkwinkel in einem aktiven Hinterachs-Lenksystem eingestellt wird.

18. Verfahren nach einem der Ansprüche 1 bis 17, **dadurch gekennzeichnet, dass** der Gierwinkel ($\dot\psi$) so verstellt wird, dass ein Unfall vermieden oder zumindest die Unfallfolgen reduziert werden.

19. Vorrichtung zur Warnung des Fahrers eines Kraftfahrzeugs, mit einer Unfalldetektionseinrichtung, wobei im Falle einer erhöhten Unfallgefahr zur Warnung des Fahrers eine Stelleinrichtung im Kraftfahrzeug betätigt wird zur Änderung ($\Delta\omega$) der Gierrate ($\dot\psi$) bzw. einer mit der Gierrate korrelierenden Zustandsgröße, wobei die Warnung derart ausgestattet ist, dass es sich dabei um einen Gierratenimpuls mit einer schlagartigen Änderung der Gierrate handelt, welcher jedoch an sich keinen oder zumindest keinen wesentlichen Einfluss auf die Querdynamik des Kraftfahrzeugs hat.

**Claims**

1. Method for warning the driver of a motor vehicle which is equipped with an accident detection device, wherein in the case of an increased risk of an accident at least one driving state variable in the motor vehicle is changed in order to warn the driver, **characterized in that** the driving state variable to be changed is the yaw rate ($\dot\psi$) or a state variable correlating therewith, wherein the warning is configured in such a way that it is a yaw rate pulse with a sudden change in the yaw rate, but which yaw rate pulse does not per se have an influence, or at least a significant influence, on the lateral dynamics of the motor vehicle.

2. Method according to Claim 1, **characterized in that** the change ($\Delta\omega$) in the yaw rate ($\dot\psi$) is below a predefined or calculated upper limiting value.

3. Method according to Claim 1 or 2, **characterized in that** the change ($\Delta\omega$) in the yaw rate ($\dot\psi$) correlates with the probability of an accident and/or the severity of the accident to be expected.

**4.** Method according to one of Claims 1 to 3, **characterized in that** the yaw rate ($\dot{\psi}$) is changed only in the event of the probability of the predicted accident exceeding a threshold value.

**5.** Method according to one of Claims 1 to 4, **characterized in that** the change ($\Delta\omega$) in the yaw rate ($\dot{\psi}$) is above a predefined or calculated lower limiting value.

**6.** Method according to one of Claims 1 to 5, **characterized in that** the time-dependent build-up gradient with which the yaw rate ($\dot{\psi}$) is increased is maximized.

**7.** Method according to one of Claims 1 to 6, **characterized in that** the time-dependent return gradient with which the yaw rate ($\dot{\psi}$) is reduced again is maximized.

**8.** Method according to one of Claims 1 to 7, **characterized in that** the yaw rate ($\dot{\psi}$) is changed only in stable driving states in order to warn the driver.

**9.** Method according to Claim 8, **characterized in that** the yaw rate ($\dot{\psi}$) is changed only if the side slip angle of the motor vehicle is below a permissible limiting value.

**10.** Method according to one of Claims 1 to 9, **characterized in that** the yaw rate ($\dot{\psi}$) is changed as a function of the moment of inertia ($J_z$) of the vehicle about the vertical axis.

**11.** Method according to one of Claims 1 to 10, **characterized in that** the yaw rate ($\dot{\psi}$) is changed as a function of the yaw moment ($M_z$) about the vertical axis.

**12.** Method according to Claims 10 and 11, **characterized in that** the change ($\Delta\omega$) in the yaw rate ($\dot{\psi}$) is carried out according to the following function:

$$\Delta\omega = \frac{1}{J_z} \int M_z dt \quad,$$

**13.** Method according to one of Claims 1 to 12, **characterized in that** at least one vehicle wheel is braked in order to change ($\Delta\omega$) the yaw rate ($\dot{\psi}$).

**14.** Method according to one of Claims 1 to 13, **characterized in that** drive torques are distributed by acting on active actuator elements between various vehicle wheels in order to change the yaw rate ($\dot{\psi}$).

**15.** Method according to one of Claims 1 to 14, **characterized in that** the yaw rate ($\dot{\psi}$) is changed by generating an additional steering angle in an active steering system.

**16.** Method according to Claim 15, **characterized in that** the additional steering angle is set in an active front-axle steering system.

**17.** Method according to Claim 15 or 16, **characterized in that** the additional steering angle is set in an active rear-axle steering system.

**18.** Method according to one of Claims 1 to 17, **characterized in that** the yaw angle ($\dot{\psi}$) is adjusted in such a way that an accident is avoided or at least the consequences of an accident are reduced.

**19.** Device for warning the driver of a motor vehicle, having an accident detection device, wherein in the case of an increased risk of an accident an actuating device in the motor vehicle is activated to change ($\dot{\psi}$) the yaw rate ($\dot{\psi}$) or a state variable correlating with the yaw rate in order to warn the driver, wherein the warning is configured in such a way that it is a yaw rate pulse with a sudden change in the yaw rate, but which yaw rate pulse does not per se have an influence, or at least a significant influence, on the lateral dynamics of the motor vehicle.

**Revendications**

**1.** Procédé d'avertissement du conducteur d'un véhicule automobile équipé d'un dispositif de détection des accidents et dans lequel au cas où le risque d'accident est accru, pour avertir le conducteur, au moins une grandeur d'état de conduite est modifiée dans le véhicule automobile, **caractérisé en ce que** la grandeur d'état de conduite à modifier est la vitesse de lacet ($\dot{\psi}$) ou une grandeur qui y est corrélée, l'avertissement étant configuré de telle sorte qu'il est une impulsion de vitesse de lacet avec une modification brusque de la vitesse de lacet qui n'a intrinsèquement pas d'influence ou pas d'influence essentielle sur la dynamique transversale du véhicule automobile.

**2.** Procédé selon la revendication 1, **caractérisé en ce que** la modification ($\Delta\omega$) de la vitesse de lacet ($\dot{\psi}$) est située en dessous d'une valeur limite supérieure prédéterminée ou calculée.

**3.** Procédé selon les revendications 1 ou 2, **caractéri-**

sé en ce que la modification ($\Delta\omega$) de la vitesse de lacet ($\dot\psi$) est corrélée à la probabilité d'accident et/ou à la gravité attendue de l'accident.

4. Procédé selon l'une des revendications 1 à 3, **caractérisé en ce que** la vitesse de lacet ($\dot\psi$) n'est modifiée que si la probabilité de l'accident pronostiqué dépasse une valeur de seuil.

5. Procédé selon l'une des revendications 1 à 4, **caractérisé en ce que** la modification ($\Delta\omega$) de la vitesse de lacet ($\dot\psi$) est située au-dessus d'une valeur limite inférieure prédéterminée ou calculée.

6. Procédé selon l'une des revendications 1 à 5, **caractérisé en ce que** le gradient d'établissement en fonction du temps par lequel la vitesse de lacet ($\dot\psi$) est augmentée est maximisé.

7. Procédé selon l'une des revendications 1 à 6, **caractérisé en ce que** le gradient de retour en fonction du temps par lequel la vitesse de lacet ($\dot\psi$) est de nouveau abaissée est maximisé.

8. Procédé selon l'une des revendications 1 à 7, **caractérisé en ce que** la vitesse de lacet ($\dot\psi$) servant à avertir le conducteur n'est modifiée que dans des situations de conduite stable.

9. Procédé selon la revendication 8, **caractérisé en ce que** la vitesse de lacet ($\dot\psi$) n'est modifiée que si l'angle de flottement du véhicule automobile est situé en dessous d'une valeur limite admissible.

10. Procédé selon l'une des revendications 1 à 9, **caractérisé en ce que** la vitesse de lacet ($\psi$) est modifiée en fonction du couple d'inertie ($J_z$) du véhicule automobile autour de son axe supérieur.

11. Procédé selon l'une des revendications 1 à 10, **caractérisé en ce que** la vitesse de lacet ($\psi$) est modifiée en fonction du couple de lacet ($M_z$) autour de l'axe supérieur.

12. Procédé selon les revendications 10 et 11, **caractérisé en ce que** la modification ($\Delta\omega$) de la vitesse de lacet ($\psi$) est exécutée selon la fonction sivante :

$$\Delta\omega = \frac{1}{J_z}\int M_z\,dt \quad .$$

13. Procédé selon l'une des revendications 1 à 12, **caractérisé en ce qu'**au moins une roue du véhicule est freinée pour modifier ($\Delta\omega$) la vitesse de lacet ($\psi$).

14. Procédé selon l'une des revendications 1 à 13, caractérisé en ce que les couples d'entraînement sont répartis en sollicitant des organes de réglage actif entre différentes roues du véhicule pour modifier la vitesse de lacet ($\psi$).

15. Procédé selon l'une des revendications 1 à 14, **caractérisé en ce que** la vitesse de lacet ($\psi$) est modifiée en formant un angle supplémentaire de braquage dans un système de braquage actif.

16. Procédé selon la revendication 15, **caractérisé en ce que** l'angle de braquage supplémentaire est établi dans un système de braquage actif de l'essieu avant.

17. Procédé selon les revendications 15 ou 16, **caractérisé en ce que** l'angle de braquage supplémentaire est établi dans un système de braquage actif de l'essieu arrière.

18. Procédé selon l'une des revendications 1 à 17, **caractérisé en ce que** l'angle de lacet ($\psi$) est ajusté de manière à éviter un accident ou au moins réduire les conséquences de l'accident.

19. Procédé d'avertissement du conducteur d'un véhicule automobile équipé d'un dispositif de détection des accidents et dans lequel, au cas où le risque d'accident est augmenté, pour avertir le conducteur, un dispositif de réglage du véhicule automobile est actionné en vue de modifier ($\Delta\omega$) la vitesse de lacet ($\psi$) ou une grandeur d'état corrélée à la vitesse de lacet, l'avertissement étant configuré de telle sorte qu'il est une impulsion de vitesse de lacet avec une modification brusque de la vitesse de lacet qui n'a intrinsèquement pas d'influence ou pas d'influence essentielle sur la dynamique transversale du véhicule automobile.

**Fig. 1**

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10029874 A1

- DE 102004030756 A1